# EUROPEAN PATENT APPLICATION

(11) **EP 4 129 649 A1**
(43) Date of publication of application: **08.02.2023**
(21) Application number: 21780911.0
(22) Date of filing: 10.03.2021
(51) Int. Cl.: B32B 17/10, B32B 3/08

(54) **MULTILAYER STRUCTURE**

(30) Priority: 30.03.2020 JP 2020059416
(71) Applicant: Nitto Denko Corporation, Ibaraki-shi, Osaka 567-8680 (JP)
(72) Inventor: MURASHIGE, Takeshi, Ibaraki-shi, Osaka 567-8680 (JP); INAGAKI, Junichi, Ibaraki-shi, Osaka 567-8680 (JP); SATO, Keisuke, Ibaraki-shi, Osaka 567-8680 (JP); KISHI, Atsushi, Ibaraki-shi, Osaka 567-8680 (JP)
(74) Representative: Hoffmann Eitle
(86) International application number: PCT/JP2021/009469
(87) International publication number: WO 2021/199987

(57) **Abstract**

A disclosed multilayer structure includes a resin layer, a glass layer laminated over the resin layer, and a tension applying portion configured to apply a tension in a direction in which the resin layer extends.

## Description

### TECHNICAL FIELD

The present invention relates to a multilayer structure.

### BACKGROUND ART

Multilayer structures in which two or more layers are laminated are known. As an example, a multilayer structure in which a silver reflecting layer is laminated on a thin glass layer (glass film) is given. Such a multilayer structure has surface hardness, dimensional stability, chemical resistance, lightness, and flexibility. Therefore, use of such a multilayer structure will enable eliminating a danger due to weight and cracking, which has been a problem of a conventional sheet glass, and such a multilayer structure replaces a conventional one in various applications.

### RELATED ART DOCUMENTS

### [Patent Document]

Patent Document 1: Japanese Unexamined Patent Application Publication No. 2013-231744

### SUMMARY OF THE INVENTION

### [PROBLEM TO BE SOLVED BY THE INVENTION]

However, while the conventional multilayer structure having a glass layer can locally ensure the planarity of the glass layer, it is difficult to achieve the planarity of the conventional sheet glass over a wide range that requires the rigidity opposite to the flexibility of the multilayer structure.

One aspect of the present invention has an object to provide a multilayer structure having the improved planarity of a glass layer.

### [MEANS FOR SOLVING THE PROBLEM]

In one aspect according to the present invention, a multilayered structure according to an embodiment includes
a resin layer;
a glass layer laminated over the resin layer; and
a tension applying portion configured to apply a tension in a direction in which the resin layer extends.

### [ADVANTAGEOUS EFFECT OF THE PRESENT INVENTION]

According to the disclosed technology, a multilayer structure having improved planarity of a glass layer is provided.

### [BRIEF DESCRIPTION OF THE DRAWINGS]

FIG. 1 is a plan view illustrating a multilayer structure according to a first embodiment.
FIG. 2 is a cross-sectional view illustrating the multilayer structure according to the first embodiment.
FIG. 3 is a cross-sectional view illustrating an example of a tension applying portion.
FIG. 4 is a cross-sectional view illustrating another example of the tension applying portion.
FIG. 5 is a sectional view illustrating a modification of a position where a through hole is provided.
FIG. 6 is a cross-sectional view illustrating a multilayer structure according to a first modification of the first embodiment.
FIG. 7 is a cross-sectional view illustrating a multilayer structure according to a second modification of the first embodiment.
FIG. 8 is a plan view illustrating a multilayer structure according to a third modification of the first embodiment.
FIG. 9 is a plan view illustrating a multilayer structure according to a fourth modification of the first embodiment.
FIG. 10 is a plan view illustrating a multilayer structure according to a second embodiment.
FIG. 11 is a cross-sectional view illustrating the multilayer structure according to the second embodiment.
FIG. 12 is a cross-sectional view illustrating a multilayer structure prior to heat treatment of the tension application portion.
FIG. 13 is a cross-sectional view illustrating a multilayer structure according to a first modification of the second embodiment.
FIG. 14 is a cross-sectional view illustrating a multilayer structure according to a second modification of the second embodiment.

### EMBODIMENTS FOR CARRYING OUT THE INVENTION

Hereinafter, embodiments of the invention will be described with reference to the accompanying drawings. In each of the drawings, the same components are denoted by the same reference numerals, and duplicated descriptions may be omitted.

### <First Embodiment>

### [Multilayer Structure]

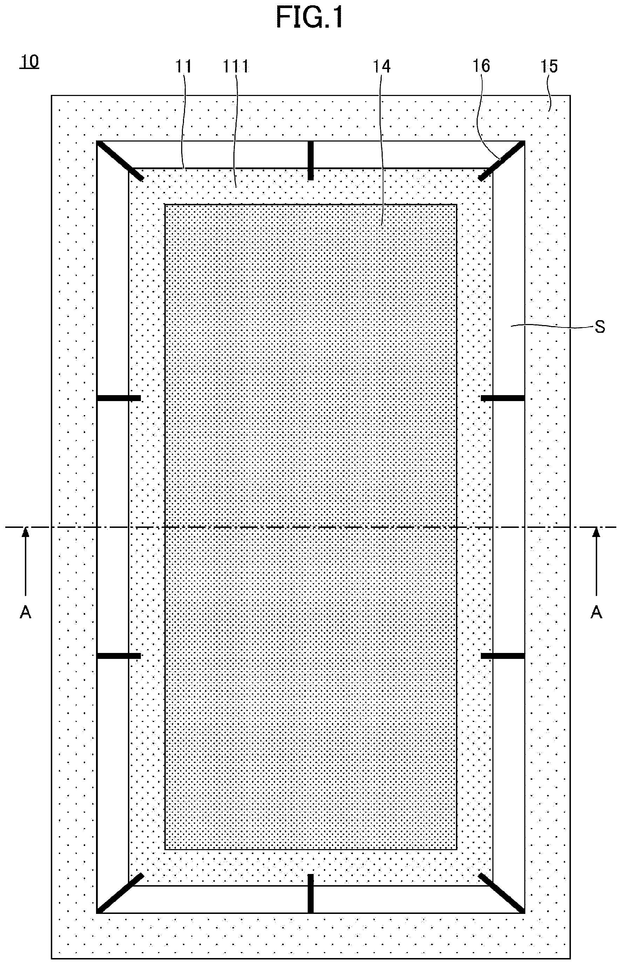

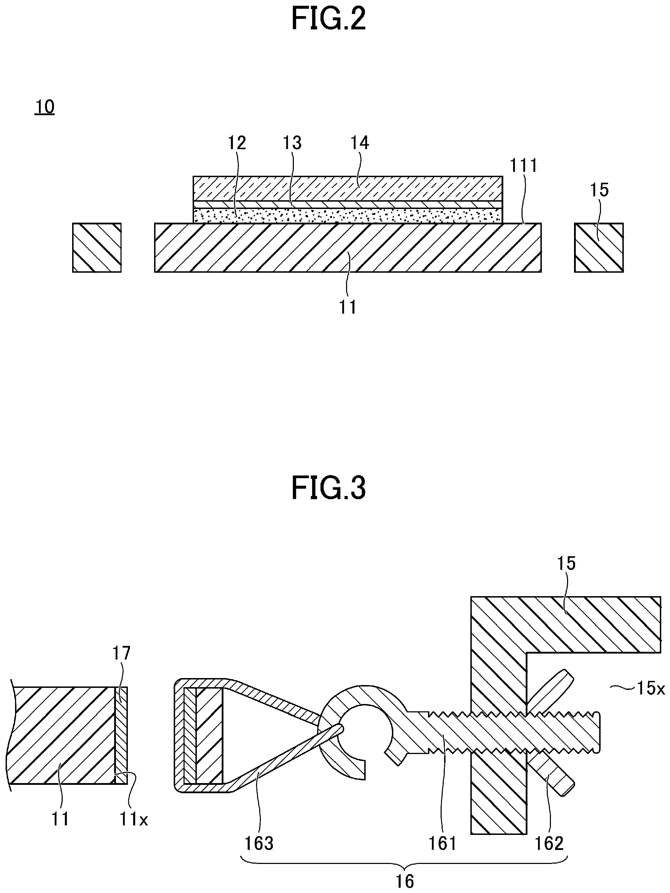

FIG. 1 is a plan view illustrating a multilayer structure according to a first embodiment. FIG. 2 is a cross-sectional view illustrating the multilayer structure according to the first embodiment, which illustrates a cross-section cut along a line A-A in FIG. 1.

As illustrated in FIGS. 1 and 2, a multilayer structure 10 includes a resin layer 11, a pressure-sensitive adhesive layer 12, a metal layer 13, a glass layer 14, a support 15, and tension applying portions 16. In the multilayer structure 10, the pressure-sensitive adhesive layer 12, the metal layer 13, and the glass layer 14 are laminated in this order in a predetermined region of an upper surface 111 of the resin layer 11.

The pressure-sensitive adhesive layer 12, the metal layer 13, and the glass layer 14 have substantially the same planar shape (a shape seen from the direction normal to the upper surface 111 of the resin layer 11), such as a rectangular shape. The planar shape of the resin layer 11 is, for example, a rectangular shape that is larger than the rectangular shapes of the pressure-sensitive adhesive layer 12, the metal layer 13, and the glass layer 14. In a plan view (as viewed from the direction normal to the upper surface 111 of the resin layer 11), an outer peripheral region of the upper surface 111 of the resin layer 11 is exposed in a frame shape on an outer peripheral side of the glass layer 14.

The support 15 is a frame-shaped member having a larger outer shape than that of the resin layer 11. The support 15 is annularly provided outside the resin layer 11, the pressure-sensitive adhesive layer 12, the metal layer 13 and the glass layer 14 so as not to come into contact with side surfaces of the resin layer 11, the pressure-sensitive adhesive layer 12, the metal layer 13 and the glass layer 14 in a plan view. In a plan view, a space S is formed between the outer peripheral surface (side surfaces) of the resin layer 11 and the inner peripheral surface (inner side surfaces) of the support 15.

The tension applying portion 16 is a portion to which tension is applied in the direction in which the resin layer 11 extends. The direction in which the resin layer 11 extends is generally perpendicular to the direction in which the layers are stacked in the multilayer structure 10. In other words, the direction in which the resin layer 11 extends is generally parallel to the upper surface 111 of the resin layer 11. Here, the extension does not mean that the glass layer extends greatly, but means that the glass layer extends by several µm to several hundreds um so as to eliminate the waviness of the surface of the glass layer 14.

A plurality of tension applying portions 16 are provided to apply tension in four directions so that the outer peripheral side of the resin layer 11 is pulled toward the support 15 side. The tension applying portions 16 connect the outer peripheral region of the resin layer 11 to the support 15 through the space S. In order for the resin layer 11 to be pulled uniformly toward the support 15, it is preferable that tension applying portions 16 are connected at one end to at least four corners of the outer peripheral region of the resin layer 11. Tension applying portions 16 may be connected at one end to any locations other than the vicinities of the four corners of the outer peripheral region of the resin layer 11.

In this manner, the tension applying portions 16 are provided to apply the tension in four directions so that the outer peripheral region of the resin layer 11 is pulled toward the support 15, thereby extending the resin layer 11. Thus, the glass layer 14 provided on the resin layer 11 is also pulled toward the support 15 side, so that the planarity of the glass layer 14 can be improved.

Here, the planarity indicates an average height difference (That is, a waviness) from the average plane in the reference length, and can be expressed by, for example, the arithmetic mean waviness Wa. In the present application, the arithmetic mean waviness Wa means a value measured with a reference length of 10 cm in compliance with JIS-B-0601 (2013).

For example, when the tension applying portion 16 is not provided on the upper and lower surfaces of the glass layer 14, the arithmetic mean waviness Wa is approximately 1000 um, but by providing the tension applying portions 16 to adjust the tension, the arithmetic mean waviness Wa can be reduced to 100 um or less. The arithmetic mean waviness Wa of the upper and lower surfaces of the glass layer 14 is more preferably 100 um or less, and particularly preferably 50 um or less. Although the lower limit value of the arithmetic mean waviness Wa of the upper and lower surfaces of the glass layer 14 may be 0 um, the arithmetic mean waviness Wa is normally larger than 0 um (For example, several pm).

When the arithmetic mean waviness Wa of the upper and lower surfaces of the glass layer 14 is within the above range, the planarity of the glass layer 14 can be improved, and the distortion of an image reflected on a mirror can be reduced when the multilayer structure is used as a mirror, for example. The multilayer structure 10 can be used as a full-length mirror, for example, by attaching the back of the support 15 to a wall or the like in a room.

FIG. 3 is a sectional view illustrating an example of the tension applying portion. In the example illustrated in FIG. 3, the tension applying portion 16 includes a hook bolt 161, a thumbscrew 162, and a linear member 163.

A through hole 11x penetrating the resin layer 11 in the thickness direction is provided in the outer peripheral region of the resin layer 11, and a cylindrical metal member 17 is inserted into the through hole 11x for reinforcement. The metal member 17 is made of, for example, stainless steel.

Meanwhile, the support 15 is provided with a hook bolt 161 penetrating the sidewall so that the hook protrudes from the inner peripheral side of the sidewall to the resin layer 11 side, and a thumbscrew 162 is screwed to the outer peripheral side of the sidewall. The hook bolt 161 and the thumbscrew 162 are made of, for example, stainless steel. As illustrated in FIG. 3, the thumbscrew 162 may be disposed in a recess 15x provided below the outer peripheral side of the sidewall, or may be disposed so as to protrude from the outer peripheral side of the sidewall without providing a recess 15x.

The linear member 163 is provided so as to pass through the inside of the through hole of the metal member 17 and the inside of the hook of the hook bolt 161. The linear member 163 is preferably made of a material that does not itself extend or shrink as the material generates a constant tension. The linear member 163 is made of, for example, stainless steel.

In FIG. 3, the protruded amount of the hook bolt 161 from the inner peripheral side of the sidewall of the support 15 can be adjusted by rotating the thumbscrew 162. Tension generated in the tension applying portion 16 can be increased by reducing the protruded amount of the hook bolt 161 from the inner peripheral side of the sidewall of the support 15.

In this manner, the hook bolt 161, the thumbscrew 162, and the linear member 163 of the tension applying portion 16 connect the through hole 11x provided in the outer peripheral region of the resin layer 11 to the support 15. The hook bolt 161 and the thumbscrew 162 of the tension applying portion 16 function as a tension adjusting portion to adjust a force for pulling the linear member 163 toward the support 15.

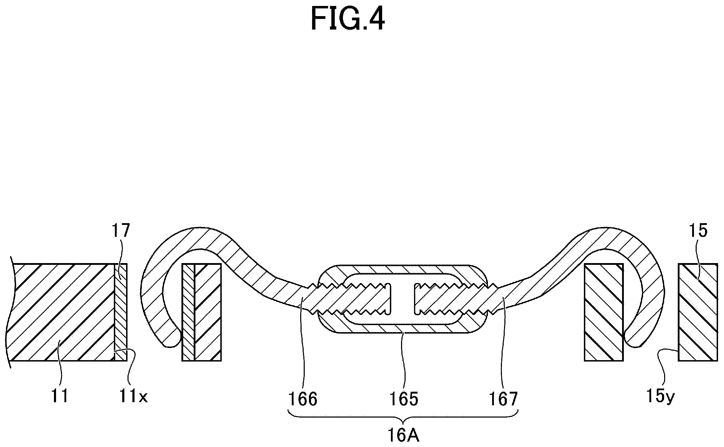

FIG. 4 is a cross-sectional view illustrating another example of the tension applying portion. In the example illustrated in FIG. 4, the tension applying portion 16A is a so-called turnbuckle in which hook bolts 166 and 167 threaded in opposite directions are screwed to a central body portion 165.

As in FIG. 3, a through hole 11x penetrating the resin layer 11 in the thickness direction is provided in the outer peripheral region of the resin layer 11, and a cylindrical metal member 17 is inserted into the through hole 11x for reinforcement. The support 15 is provided with a through hole 15y penetrating the support 15 in the thickness direction. The hook of the hook bolt 166 of the tension applying portion 16A is inserted inside the metal member 17, and the hook of the hook bolt 167 is inserted inside the through hole 15y.

In FIG. 4, the protruded amounts of the hook bolts 166 and 167 from both sides of the body portion 165 can be adjusted by rotating the body portion 165. Tension generated in the tension applying portion 16A can be increased by reducing the protruded amounts of the hook bolts 166 and 167 from both sides of the body portion 165.

As described above, the body portion 165 of the tension applying portion 16A and the hook bolts 166 and 167 connect the through holes 11x provided in the outer peripheral region of the resin layer 11 to the support 15. The body portion 165 of the tension applying portion 16A functions as a tension adjusting portion to adjust a force for pulling the hook bolt 166 toward the support 15.

FIG. 3 and FIG. 4 are examples of the tension applying portion, and the tension applying portion may take any form other than FIG. 3 and FIG. 4 as long as the tension can be applied so as to pull the outer peripheral side of the resin layer 11 toward the support 15 side. For example, in FIG. 3, instead of passing the linear member 163 through the metal member 17, the linear member 163 may be bonded to the outer peripheral region of the resin layer 11 without providing the metal member 17.

In FIG. 4, instead of the turnbuckle, a compression coil spring having hooks at both ends may be used. In FIG. 4, a linear member similar to that illustrated in FIG. 3 may be interposed between the hook of the hook bolt 166 and the through hole 11x and/or between the hook of the hook bolt 167 and the through hole 15y.

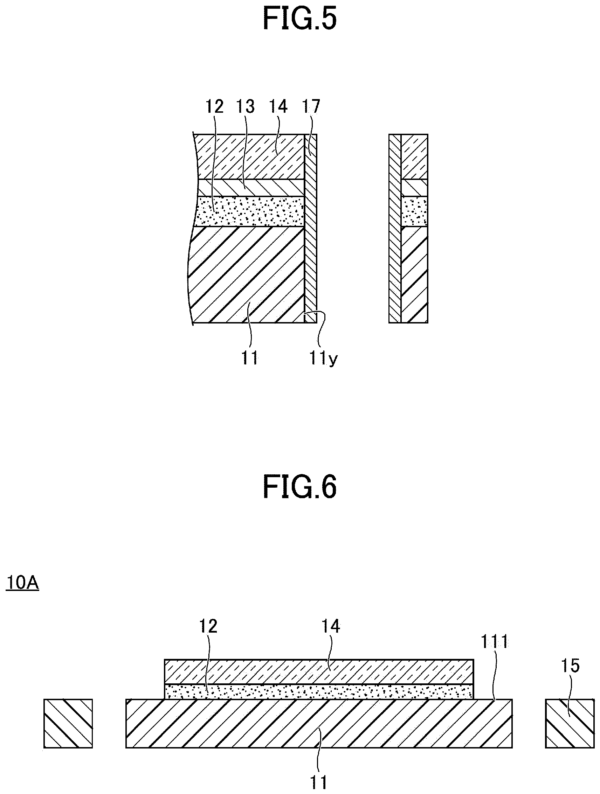

As illustrated in FIG. 5, the size of the resin layer 11 may be made similar to that of the glass layer 14 or the like, and the resin layer 11, the pressure-sensitive adhesive layer 12, the metal layer 13, and the through hole 11y passing through the glass layer 14 may be provided. In this case, the tension applying portion 16 illustrated in FIG. 3 and the tension applying portion 16A illustrated in FIG. 4 can be used with respect to the through hole 11y.

Here, materials and the like of each part of the multilayer structure 10 will be described.

### [Resin layer]

The resin layer 11 is a base material on which the glass layer 14 and the like is laminated, and has flexibility. The resin layer 11 includes one or a plurality of layers.

Examples of the material used for the resin layer 11 include polyester resins such as polyethylene terephthalate resins and polyethylene naphthalate resins, cycloolefin resins such as norbornene resins, polyether sulfone resins, polycarbonate resins, acrylic resins, polyolefin resins, polyimide resins, polyamide resins, polyimide amide resins, polyarylate resins, polysulfone resins, polyether imide resins, cellulose resins, and the like. Of these, polyethylene terephthalate, triacetyl cellulose, acrylic and polycarbonate are preferably used because of their mechanical strength to withstand tension. The color of the resin layer 11 is not particularly specified, but a material having high transparency is selected when transparency is considered to be important in the multilayer structure. The resin layer 11 may contain an additive such as inorganic particles.

The thickness of the resin layer 11 is preferably 20 um or more and 2000 um or less, and particularly preferably 50 um or more and 500 µm or less. When the thickness of the resin layer 11 is set to 50 µm or more, the film strength can be secured, and when the thickness of the resin layer 11 is set to 500 um or less, the stretching effect by tension can be obtained.

### [Glass Layer]

The glass layer 14 is not particularly specified, and an appropriate glass layer can be adopted depending on the purpose. The glass layer 14 may be, for example, soda lime glass, boric acid glass, aluminosilicate glass, quartz glass or the like according to the classification by composition. According to the classification by the alkali component, alkali-free glass and low alkali glass are given. The content of the alkali metal component (For example, Na₂O, K₂O, Li₂O) of the glass is preferably 15 wt% or less, and more preferably 10 wt% or less.

The thickness of the glass layer 14 is preferably 10 µm or more in consideration of the surface hardness, airtightness, and corrosion resistance of the glass. Since the glass layer 14 is preferably flexible like a film, the thickness of the glass layer 14 is preferably 300 µm or less. The thickness of the glass layer 14 is more preferably 30 um to 200 um, and particularly preferably 50 µm to 100 µm.

The light transmittance of the glass layer 14 at a wavelength of 550 nm is preferably 85% or more. The refractive index of the glass layer 14 at a wavelength of 550 nm is preferably 1.4 to 1.65. The density of the glass layer 14 is preferably 2.3 g/cm³ to 3.0 g/cm³, and more preferably 2.3 g/cm³ to 2.7 g/cm³.

The method of forming the glass layer 14 is not particularly specified, and an appropriate method can be adopted depending on the purpose. Typically, the glass layer 14 can be prepared by melting a mixture containing a main raw material such as silica or alumina, an antifoaming agent such as mirabilite and antimony oxide, and a reducing agent such as carbon at a temperature of approximately 1400°C to 1600°C, molding the mixture into a thin plate, and then cooling the thin plate. Examples of the method of forming the glass layer 14 include a slot-down draw method, a fusion method, and a float method. The glass layer formed in a plate-like shape by these methods may be chemically polished with a solvent such as hydrofluoric acid, if necessary, for thinning or enhancing smoothness.

### [Metal Layer]

The metal layer 13 is formed on the surface of the glass layer 14 on the pressure-sensitive adhesive layer 12 side. The metal layer 13 is a layer that reflects visible light incident through the glass layer 14. As the material of the metal layer 13, a material having a high visible light reflectance is preferable, such as, aluminum, silver, silver alloy, or the like. The thickness of the metal layer 13 is not particularly specified, but is, for example, approximately 10 nm to 500 nm. The metal layer 13 can be formed by, for example, a sputtering method, a vapor deposition method, a plating method, or the like. In addition to the metal layer 13, a functional layer such as an antifouling layer, an antireflection layer, a conductive layer, a reflection layer, or a decorative layer may be provided on the surface of the glass layer 14.

### [Pressure-Sensitive Adhesive Layer]

The pressure-sensitive adhesive layer 12 is provided between the resin layer 11 and the glass layer 14 on which the metal layer 13 is formed. Any suitable pressure-sensitive adhesive is used as the pressure-sensitive adhesive layer 12. Examples of the material used for the pressure-sensitive adhesive layer 12 include an acrylic pressure-sensitive adhesive, a silicone pressure-sensitive adhesive, a rubber pressure-sensitive adhesive, and the like. The thickness of the pressure-sensitive adhesive layer 12 is not particularly specified, but is, for example, approximately 10 um to 500 µm.

An adhesive layer may be used in place of the pressure-sensitive adhesive layer 12 according to required specifications. Examples of the material used for the adhesive layer used in place of the pressure-sensitive adhesive layer 12 include an ultraviolet curable acrylic adhesive, an ultraviolet curable epoxy adhesive, a thermosetting epoxy adhesive, a thermosetting melamine adhesive, a thermosetting phenolic adhesive, an ethylene vinyl acetate (EVA) interlayer, a polyvinyl butyral (PVB) interlayer, and the like.

In the present specification, a pressure-sensitive adhesive refers to a layer that has adhesiveness at room temperature and adheres to the adherend under light pressure. Accordingly, even when the adherend adhered to the pressure-sensitive adhesive is peeled off, the pressure-sensitive adhesive retains a practical tack strength. The adhesive, on the other hand, refers to a layer that can bind a substance by intervening between the substances. Therefore, when the adherend adhered to the adhesive is peeled off, the adhesive does not have a practical adhesive strength.

### [Support]

The support 15 is made of a material having higher rigidity than the resin layer 11. Examples of the material used for the support 15 include metal, resin, glass, etc. The thickness of the support 15 may be thicker than that of the resin layer 11, thinner than that of the resin layer 11, or the same as that of the resin layer 11 if sufficient rigidity can be ensured. When the multilayer structure 10 is used as a mirror and the support 15 is fixed to a wall, the resin layer 11 and the support 15 can be made inconspicuous by selecting a transparent material as the resin layer 11 and the support 15, for example.

### [Manufacturing Method]

The laminated portion of the glass layer 14 on which the resin layer 11, the pressure-sensitive adhesive layer 12, and the metal layer 13 are formed is obtained by laminating, via the pressure-sensitive adhesive layer 12, the resin layer 11 formed in a predetermined shape by pressing or the like and the glass layer 14 on which the metal layer 13 is formed. Alternatively, the resin layer 11, and the glass layer 14 on which the metal layer 13 is formed may be continuously laminated via the pressure-sensitive adhesive layer 12 by using a roll-to-roll process, and may then be divided into pieces in any desired size by pressing or the like.

### [Application]

The multilayer structure 10 is used, for example, as a plane mirror, a partition, a decorative plate, a building material, etc. The same applies to examples of the multilayer structure given below.

### <Modifications of First Embodiment>

A modification of the first embodiment illustrates an example of a multilayer structure having a structure different from that of the first embodiment. In the modification of the first embodiment, description of the same components as those of the above-described embodiment may be omitted.

FIG. 6 is a cross-sectional view illustrating a multilayer structure according to a first modification of the first embodiment. Note that a plan view of the multilayer structure according to the first modification of the first embodiment is the same as that of FIG. 1, and is therefore not illustrated. As illustrated in FIG. 6, a multilayer structure 10A differs from the multilayer structure 10 (see FIG. 2, etc.) in that the metal layer 13 is not formed on the lower surface side of the glass layer 14.

Thus, the multilayer structure may not necessarily have a metal layer. When the multilayer structure 10A does not have a metal layer, for example, the multilayer structure 10A can be used in the same manner as an ordinary glass film by selecting a transparent material from the materials exemplified in the first embodiment as the resin layer 11 and the pressure-sensitive adhesive layer 12.

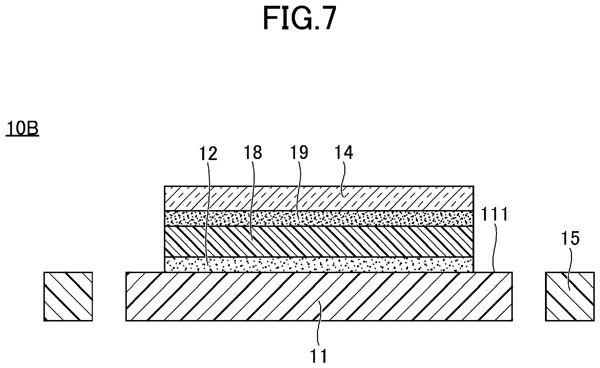

FIG. 7 is a sectional view illustrating a multilayer structure according to a second modification of the first embodiment. Note that a plan view of the multilayer structure according to the second modification of the first embodiment is the same as that of FIG. 1, and is therefore not illustrated. As illustrated in FIG. 7, a multilayer structure 10B differs from the multilayer structure 10 (see FIG. 2, etc.) in that the metal layer 13 is not formed on the lower surface side of the glass layer 14, and a resin layer 18 and an adhesive layer 19 are sequentially laminated between the pressure-sensitive adhesive layer 12 and the glass layer 14.

The resin layer 18 includes one or a plurality of layers, and is a layer having functions such as toughness, phase shift or polarizability, conductivity, reflectivity, and designability. When the resin layer 18 includes a plurality of layers, it is preferable to laminate the plurality of layers with a cohesive layer with an adhesive function being interposed therebetween. The total thickness of the resin layer 18 may be 20 um or more and 1000 µm or less from the viewpoint of flexibility, preferably 25 µm or more and 500 um less, and more preferably 25 um or more and 300 um or less. The materials of the resin layer 18 and the adhesive layer 19 can be suitably selected from the materials exemplified in the first embodiment.

As described above, in the multilayer structure, another resin layer having a predetermined function may be laminated between the glass layer and the resin layer separately from the resin layer serving as the base material. The other resin layers are not limited to one layer but may be two or more layers. Thus, a multilayer structure having a predetermined optical performance, a multilayer structure usable as a decorative plate, or the like can be provided.

In FIG. 2, the resin layer 18 and the adhesive layer 19 may be sequentially laminated between the pressure-sensitive adhesive layer 12 and the metal layer 13. In this case, for example, since the resin layer 18 has toughness, the glass layer 14 is not readily cracked when the multilayer structure is used as a mirror.

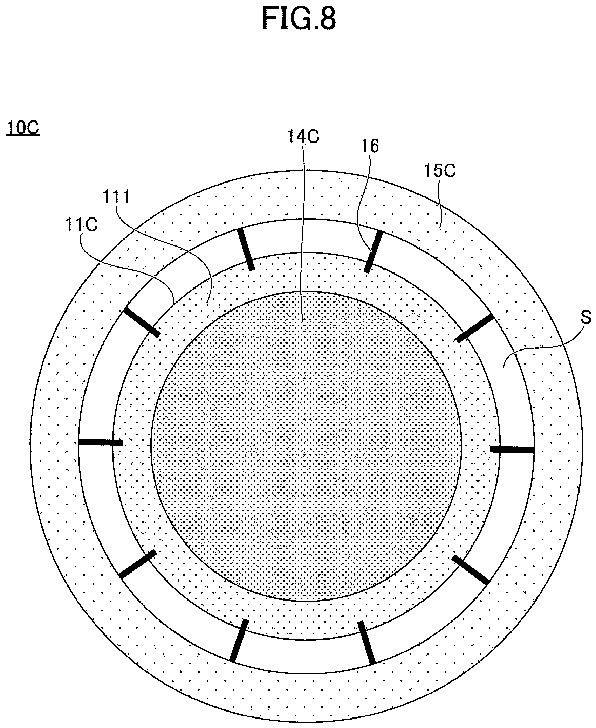

FIG. 8 is a plan view illustrating a multilayer structure according to a third modification of the first embodiment. A cross-sectional view of the multilayer structure according to the third modification of the first embodiment is the same as that of FIG. 2, and is therefore not illustrated. As illustrated in FIG. 8, a multilayer structure 10C is different in planar shape from the multilayer structure 10 (see FIG. 1, etc.).

In the multilayer structure 10C, the planar shape of a glass layer 14C is a circular shape. The planar shape of the resin layer 11C is a circular shape that is larger all-around than the circular shape of the glass layer 14C. In a plan view, the outer peripheral region of the upper surface 111 of the resin layer 11C is exposed annularly to form the outer peripheral side of the glass layer 14C.

A support 15C is a frame-shaped member having an outer shape larger than that of the resin layer 11C. The support 15C is annularly provided outside the resin layer 11C and the glass layer 14C so as not to come into contact with side surfaces of the resin layer 11C and the glass layer 14C in a plan view. In a plan view, a space S is formed between the outer peripheral surface (side surface) of the resin layer 11C and the inner peripheral surface (inner side surface) of the support 15C.

The tension applying portion 16 is the same as in the first embodiment. The plurality of tension applying portions 16 are arranged at equal intervals, for example.

As described above, the planar shape of the multilayer structure is not limited to a rectangular shape, but may be a circular shape. Alternatively, the planar shape of the multilayer structure may be, for example, an elliptical shape, a composite of a rectangular shape and a circular or elliptical shape, or any other suitable shape.

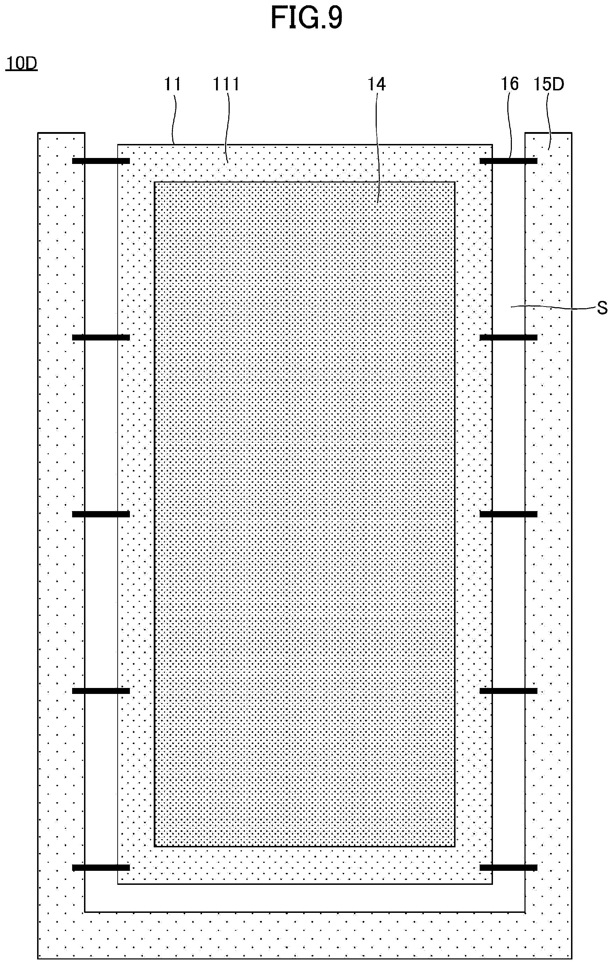

FIG. 9 is a plan view illustrating a multilayer structure according to a fourth modification of the first embodiment. A cross-sectional view of the multilayer structure according to the fourth modification of the first embodiment is the same as that of FIG. 2, and is therefore not illustrated. As illustrated in FIG. 9, a multilayer structure 10D differs from the multilayer structure 10 (see FIG. 1, etc.) in that the support 15 is replaced with a support 15D.

The support 15 illustrated in FIG. 1 is formed in a frame shape provided outside the resin layer 11 in a plan view; however, although the support 15D has facing portions facing with each other outside the resin layer 11, it is not formed in a frame shape. The support 15D is provided outside the resin layer 11 and the glass layer 14 so as not to come into contact with side surfaces of the resin layer 11 and the glass layer 14 in a plan view. The tension applying portions 16 are provided from the facing portions of the support 15D across a space S to the outer peripheral region of the resin layer 11.

As described above, the support used for the multilayer structure may have a shape that includes at least the facing portions facing with each other that interpose the resin layer and the glass layer in a plan view. The tension applying portion connects the facing portions of the support to at least an outer peripheral region of the resin layer to allow the resin layer to be pulled toward the respective facing portions of the support to apply tension to the resin layer. This enables the resin layer to stretch and the glass layer provided on the resin layer to be pulled toward the support side, thereby improving the planarity of the glass layer, and reducing the distortion of an image reflected on a mirror when the multilayer structure is used as a mirror, for example.

In the case of FIG. 9, the outer peripheral region of the resin layer 11 may be exposed from the outer peripheral side of the glass layer 14 only in the left-right direction, and may not be exposed in the up-down direction. Alternatively, as illustrated in FIG. 5, the size of the resin layer 11 may be made equal to that of the glass layer 14 or the like so that the outer peripheral region of the resin layer 11 is not exposed from the outer peripheral side of the glass layer 14.

### <Second Embodiment>

In a second embodiment, an example of a multilayer structure having a different principle of tension generation in the tension applying portion from that in the first embodiment is illustrated. In the second embodiment, a description of the same components as those of the above-described embodiments may be omitted.

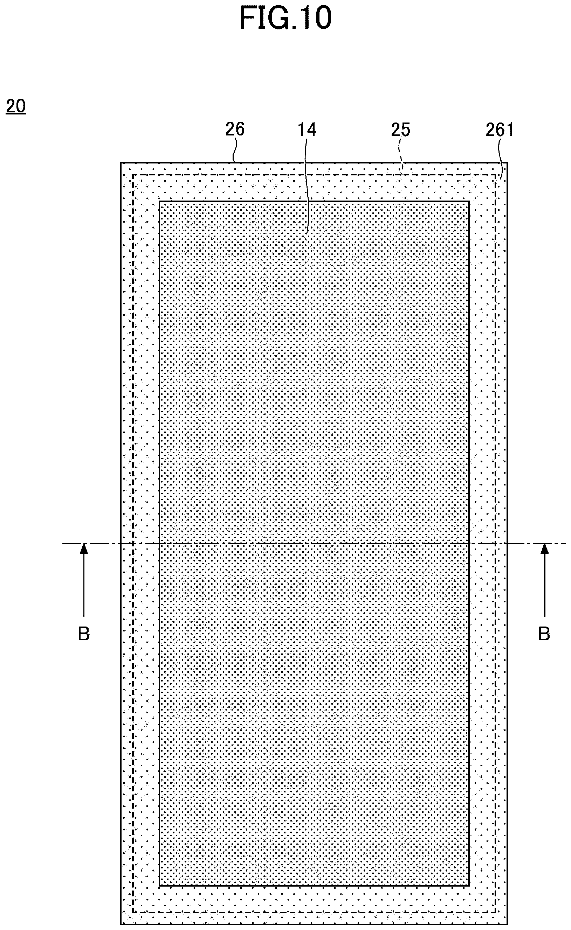

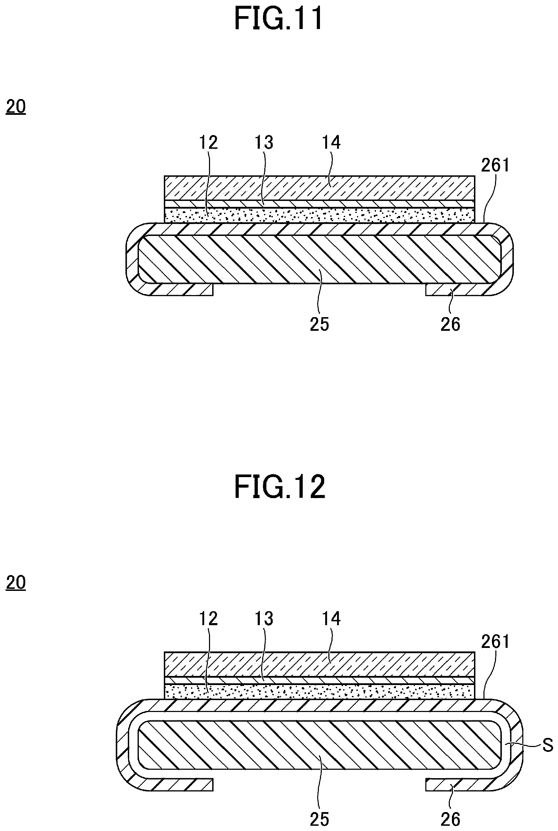

FIG. 10 is a plan view illustrating the multilayer structure according to the second embodiment. FIG. 11 is a cross-sectional view illustrating the multilayer structure according to the second embodiment, and illustrates a cross-sectional view cut along a line B-B of FIG. 10.

As illustrated in FIGS. 10 and 11, the multilayer structure 20 includes a pressure-sensitive adhesive layer 12, a metal layer 13, a glass layer 14, a support 25, and a tension applying portion 26. In the multilayer structure 20, a part of the tension applying portion 26, the pressure-sensitive adhesive layer 12, the metal layer 13, and the glass layer 14 are laminated in this order on a support 25. The pressure-sensitive adhesive layer 12, the metal layer 13, and the glass layer 14 are laminated on a predetermined region of an upper surface 261 of the tension applying portion 26 located on the support 25.

The support 25 is a plate-like member having a larger outer shape than those of the pressure-sensitive adhesive layer 12, the metal layer 13, and the glass layer 14. The support 25 is made of a material having higher rigidity than the pressure-sensitive adhesive layer 12, the metal layer 13, and the glass layer 14. The upper surface of the support 25 is planar. Examples of the material used for the support 25 include metal, resin, glass, etc. The thickness of the support 25 may be any thickness provided that sufficient rigidity can be ensured. When flexibility is considered to be important, a relatively thin resin may be used as the material of the support 25.

The tension applying portion 26 covers at least a region of the upper surface of the support 25 that overlaps the glass layer 14, and extends from the region to side surfaces and a lower surface of the support 25. The tension applying portion 26 may extend over the entire lower surface of the support 25, or may extend over a portion of the lower surface of the support 25 as illustrated in FIG. 11.

The tension applying portion 26 is a resin layer which applies tension in four directions to allow the pressure-sensitive adhesive layer 12, the metal layer 13, and the glass layer 14 to be pulled toward the outer peripheral side of the support 25. Specifically, the tension applying portion 26 is a so-called heat-shrinkable film (shrink film) having a property of shrinking by heat treatment, and FIGS. 10 and 11 illustrate a state after shrinking by heat treatment.

Examples of the material used for the heat-shrinkable film serving as the tension applying portion 26 include polyethylene terephthalate, vinyl chloride, polystyrene, polyethylene, polypropylene, and polyolefin. Among these, polyethylene terephthalate, polystyrene, and vinyl chloride are preferably used because of stability of shrinkage. The shrinkage amount of the heat-shrinkable film is preferably 1% or more and 50% or less, more preferably 5% or more and 30% or less, and particularly preferably 10% or more and 20% or less. Within this range, the planarity of the glass layer 14 is improved, and a good planar surface can be formed on the glass layer 14.

When the multilayer structure 20 is used as a mirror, and the support 25 is fixed to a wall, the support 25 and the tension applying portion 26 can be made inconspicuous by selecting a transparent material for the support 25 and the tension applying portion 26, for example.

FIG. 12 is a cross-sectional view illustrating a multilayer structure before heat treatment is applied to the tension applying portion. In FIG. 12, a tension applying portion 26 in which a pressure-sensitive adhesive layer 12, a metal layer 13, and a glass layer 14 are sequentially laminated in a predetermined region of the upper surface 261 is prepared, and the tension applying portion 26 is arranged so as to cover the support 25. A space S is provided between a surface of the support 25 and a surface of the tension applying portion 26 facing the support 25.

When the heat treatment is performed at a predetermined temperature at which the heat-shrinkable film shrinks in the state illustrated in FIG. 12, the heat-shrinkable film shrinks to eliminate the space S, and the heat-shrinkable film coheres to the surface of the support 25. At this point, the upper surface side of the heat-shrinkable film extends to form a plane along the shape of the upper surface of the support 25 (see FIG. 11). In this manner, the heat-shrinkable film, which is a resin layer, functions as the tension applying portion.

As a result, the pressure-sensitive adhesive layer 12, the metal layer 13, and the glass layer 14 formed on the upper surface of the heat-shrinkable film are also planar along the shape of the upper surface of the support 25. That is, the planarity of the glass layer 14 can be improved, and distortion of an image reflected on a mirror when the multilayer structure is used as a mirror can be reduced, for example.

In the multilayer structure 20, it is preferable to use the pressure-sensitive adhesive layer 12 instead of the adhesive layer to connect the glass layer 14 and the tension applying portion 26. When the heat-shrinkable film is subjected to heat shrinkage, the heat-shrinkable film forms a plane without interfering with the metal layer 13 and the glass layer 14 by using a material having tackiness such as the pressure-sensitive adhesive layer 12. Thus, a smoother surface can be obtained.

As in the first embodiment, the metal layer 13 need not be provided in the multilayer structure 20, or one or more other resin layers may be laminated between the glass layer 14 and the tension applying portion 26 that is a resin layer. The tension applying portion 26 may be a continuous body that wraps the support 25.

### <Modifications of Second Embodiment>

A modification of the second embodiment illustrates an example of a multilayer structure having a structure different from that of the second embodiment. In the modification of the second embodiment, description of the same components as those of the above-described embodiments may be omitted.

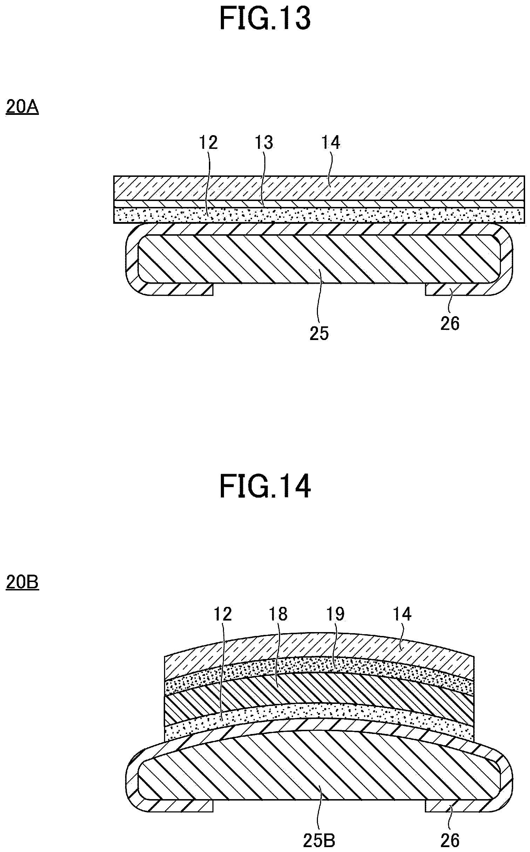

FIG. 13 is a sectional view illustrating a multilayer structure according to a first modification of the second embodiment. As in the multilayer structure 20A illustrated in FIG. 13, there is no limitation to the size relationship between the pressure-sensitive adhesive layer 12, the metal layer 13 and the glass layer 14, versus the tension applying portion 26 in a plan view, and the outer peripheral sides of the pressure-sensitive adhesive layer 12, the metal layer 13, and the glass layer 14 may protrude from the tension applying portion 26 in the horizontal direction. However, it is preferable that the protruded amount of the protruded portion be an amount to an extent that does not allow free deformation due to the rigidity of the glass. The protruded amount is 10 mm or less, preferably 5 mm or less.

FIG. 14 is a sectional view illustrating a multilayer structure according to a second modification of the second embodiment. As in a support 25B of a multilayer structure 20B illustrated in FIG. 14, an upper surface of the support 25B on which the glass layer 14 and the like are formed is not limited to a plane, but may be a curved surface. In this case, the flexible glass layer 14 and the like have curved surfaces along the shape of the upper surface of the support 25B.

In the example of FIG. 14, a pressure-sensitive adhesive layer 12, a resin layer 18, an adhesive layer 19, and a glass layer 14 are sequentially laminated on the upper surface of the support 25B via a tension applying portion 26. The multilayer structure 20B can be used, for example, as a decorative plate with the resin layer 18 as a layer having a design property.

Although the preferred embodiments and the like have been described in detail above, various modifications and substitutions can be made to the embodiments and the like without departing from the scope of the claims.

This international application claims priority under Japanese Patent Application No. 2020-059416, filed with the Japanese Patent Office on March 30, 2020, and the entire contents of Japanese Patent Application No. 2020-059416 are incorporated herein by reference.

### [Description of Reference Codes]

10, 10A, 10B, 10C, 10D, 20, 20A, 20B multilayer structure
11, 11C, 18 resin layer
11x, 11y, 15y through hole
12 pressure-sensitive adhesive layer
13 metal layer
14, 14C glass layer
15, 15C, 15D, 25, 25B support
15x recess
16, 16A, 26 tension applying portion
17 metal member
19 adhesive layer
111, 261 upper surface
161, 166, 167 hook bolt
162 thumbscrew
163 linear member
165 body portion

## Claims

1. A multilayered structure comprising:
a resin layer;
a glass layer laminated over the resin layer; and
a tension applying portion configured to apply a tension in a direction in which the resin layer extends.

2. The multilayer structure according to claim 1, comprising:
a support provided outside the resin layer and the glass layer, in a plan view, so as not to come into contact with side surfaces of the resin layer and the glass layer, and having at least facing portions facing with each other to interpose the resin layer and the glass layer, wherein
the tension applying portion connects the respective facing portions of the support to at least an outer peripheral region of the resin layer to allow the resin layer to be pulled toward the respective facing portions of the support to apply tension to the resin layer.

3. The multilayer structure according to claim 2, wherein
the outer peripheral region of the resin layer is exposed to form an outer peripheral side of the glass layer in a plan view, and
the tension applying portion connects each of the facing portions of the support and the outer peripheral region of the resin layer.

4. The multilayer structure according to claim 2 or 3, wherein
the support is provided annularly outside the resin layer and the glass layer so as not to come into contact with the side surfaces of the resin layer and the glass layer.

5. The multilayer structure according to any one of claims 2 to 4, wherein
the resin layer includes a through hole penetrating at least the outer peripheral region of the resin layer in a thickness direction, and
the tension applying portion connects the through hole and the support.

6. The multilayer structure according to claim 5, wherein
the tension applying portion includes a linear member passing through the through hole, and a tension adjusting portion configured to adjust a force for pulling the linear member toward the support.

7. The multilayer structure according to claim 1, comprising:
a support over which the resin layer and the glass layer are laminated, wherein
the resin layer is a heat-shrinkable film that covers at least a region of an upper surface of the support, the region overlapping the glass layer, in a plan view, and that extends from the region to a side surface and a lower surface of the support, and
the resin layer functions as the tension applying portion.

8. The multilayer structure according to any one of claims 1 to 7, comprising:
one or more other resin layers laminated between the glass layer and the resin layer.

9. The multilayer structure according to any one of claims 1 to 8, wherein
a thickness of the glass layer is 10 um or more and 300 um or less.

10. The multilayer structure according to any one of claims 1 to 9, wherein.
a thickness of the resin layer is 20 um or more and 2000 µm or less.
